Europäisches Patentamt

European Patent Office

Office européen des brevets

(19)

(11) **EP 0 634 990 B1**

(12) **EUROPÄISCHE PATENTSCHRIFT**

(45) Veröffentlichungstag und Bekanntmachung des Hinweises auf die Patenterteilung:
**21.05.1997   Patentblatt 1997/21**

(21) Anmeldenummer: **94907519.6**

(22) Anmeldetag: **08.02.1994**

(51) Int Cl.⁶: **C01B 3/16**, B01J 23/745, B01J 23/89, B01J 23/76

(86) Internationale Anmeldenummer:
**PCT/EP94/00364**

(87) Internationale Veröffentlichungsnummer:
**WO 94/18118 (18.08.1994 Gazette 1994/19)**

(54) **CHROMFREIER KATALYSATOR AUF BASIS EISENOXID ZUR KONVERTIERUNG VON KOHLENMONOXID**

CHROMIUM-FREE CATALYST BASED ON IRON OXIDE FOR THE CONVERSION OF CARBON MONOXIDE

CATALYSEUR SANS CHROME A BASE D'OXYDE DE FER POUR LA CONVERSION DE MONOXYDE DE CARBONE

(84) Benannte Vertragsstaaten:
**BE DE DK FR GB NL**

(30) Priorität: **09.02.1993   DE 4303715**

(43) Veröffentlichungstag der Anmeldung:
**25.01.1995   Patentblatt 1995/04**

(73) Patentinhaber: **SÜDCHEMIE AG**
**D-80333 München (DE)**

(72) Erfinder:
• **SCHNEIDER, Michael**
  **D-85521 Ottobrunn (DE)**
• **KOCHLOEFL, Karl**
  **D-83026 Rosenheim (DE)**

• **MALETZ, Gerd, J.**
  **D-83052 Bruckmühl (DE)**
• **LADEBECK, Jürgen**
  **D-83043 Bad Aibling (DE)**
• **HEINISCH, Christoph**
  **D-83620 Feldkirch/Westerham (DE)**

(74) Vertreter: **Reitzner, Bruno, Dr.**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
**EP-A- 0 062 410      EP-A- 0 234 745**
**EP-A- 0 385 123      DE-A- 2 333 816**
**US-A- 3 759 825**

**Beschreibung**

Die Erfindung betrifft einen Katalysator zur Umsetzung von Kohlenmonoxid mit Dampf zu Wasserstoff und Kohlendioxid. Insbesondere kann die Umsetzung bei Temperaturen von oberhalb etwa 300 °C durchgeführt werden und hat unter der Bezeichnung "Hochtemperaturkonvertierung" seit geraumer Zeit eine große technische Bedeutung für die Herstellung von Wasserstoff bzw. von wasserstoffreichen Synthesegasen erlangt.

Üblicherweise dient als Katalysator für die Hochtemperaturkonvertierung mit Chromoxid promotiertes Eisenoxid. Wie aus der Literatur bekannt ist, (David S. Newsome, Catal.Rev.-SCI.Eng., 21 (2), 275-318 (1980); G.C.Maiti, S.K. Gosh, Ind.J.of Technol. Vol.19, Jan.1981, 35-37) vereinigt der Chromoxidpromotor zwei Funktionen. Er dient zum einen zur Verbesserung der katalytischen Aktivität, zum anderen wirkt er als Thermostabilisator, d.h. er erhöht die thermische Stabilität des Magnetits, der aktiven Form des Katalysators, und vermeidet eine allzu schnelle Desaktivierung unter den Bedingungen der technischen Anwendung.

Leider muß bei der Verwendung von Chrom, insbesondere in sechswertiger Form, sowohl bei der Produktion als auch bei der späteren Handhabung des Katalysators, ein nicht zu unterschätzender Aufwand zur Gewährleistung der Arbeitssicherheit getrieben werden, und es läßt sich wohl trotz großer Anstrengungen eine Gesundheitsgefährdung nicht vollständig ausschließen. Zudem stellt schließlich auch der gebrauchte Katalysator eine Gefährdung für Mensch und Umwelt dar und muß unter Beachtung der für giftigen Sondermüll gültigen Bestimmungen entsorgt werden.

Aus der EP-A-0 062 410 sind Katalysatoren für die oben beschriebene Anwendung bekannt, die diesen Nachteil durch Eliminierung des Chromoxids vermeiden. Offenbart werden Formulierungen, die neben Eisenoxid mindestens ein weiteres Oxid enthalten, welches nicht leichter zum Metall reduziert wird als dreiwertiges Chromoxid. Es handelt sich hierbei um das Oxid eines Metalls, das eine Wertigkeit von mindestens 2 aufweist und das nicht imstande ist, mit dem Eisenoxid ein Mischoxid mit Spinellstruktur zu bilden, insbesondere um ein Oxid der Erdalkalimetalle Calcium, Strontium und Barium, der seltenen Erden sowie des Zirkons und des Hafniums.

Die Anwendungsbeispiele mit Calciumoxid, Ceroxid und Zirkonoxid zeigen jedoch, daß die Aktivität eines herkömmlichen Katalysators ausschließlich im Falle des ceroxidhaltigen Katalysators erreicht wird, und dann auch nur unter der Voraussetzung, daß die Aktivität auf gleichen Eisengehalt bezogen wird. Insbesondere der zirkonoxidhaltige Beispielkatalysator ist dem herkömmlichen, chromhaltigen Katalysator in Bezug auf die katalytische Aktivität deutlich unterlegen.

In der genannten Druckschrift werden keine Angaben über die thermische Stabilität der offenbarten Katalysatoren gemacht.

Die DE-C 2 245 607 betrifft die Verwendung von Katalysatoren aus Unedelmetallen und Platingruppenelementen zur Reinigung von Abgasen. Der Katalysator hat die allgemeine Formel

$$(A_1)_m(A_2)_n(B_1)_p(B_2)_q Q_3$$

wobei m bzw n Werte von 0-1 und
p bzw q Werte von >0 aber <1 annehmen können und m + 1 = 1 und p + q = 1 sind, mit

$$A_1 = La^{3+}, A_2 = Sr^{2+} \text{ und/oder } Ba^{2+}$$

$$B_1 = Ni^{2+}, Co^{2+} \text{ und/oder } Fe^{2+}, B_2 = Ru^{4+}, Ti^{4+} \text{ und/oder } Mn^{4+}$$

mit der Maßgabe, daß

$$(m \cdot a_1) + (n \cdot a_2) + (p \cdot b_1) + (q \cdot b_2) = 6,$$

worin

$a_1$ = Wertigkeit von $A_1$
$a_2$ = Wertigkeit von $A_2$
$b_1$ = Wertigkeit von $B_1$
$b_2$ = Wertigkeit von $B_2$

bedeutet.

Dieser Katalysator enthält kein Kupfer und dient als Abgas-Reinigungskatalysator.

Die EP-A-0 234 745 betrifft einen CO-Konvertierungskatalysator (Shift catalyst), welcher die calcinierte Form einer Vorstufe der Formel

$$(Cu^{2+} + Zn^{2+})_6\ Al_x\ R_y\ (CO_3)_{x+y}\ /\ 2\ OH_{12+2(x+y)}\ n\ H_2O$$

darstellt, worin R Lanthan, Cer oder Zirkon ist, x nicht weniger als 1 und nicht mehr als 4 ist; y nicht weniger als 0,01 und nicht mehr als 1,5 ist, n etwa 4 ist. Der Katalysatorvorläufer hat eine Schichtstruktur; er enthält kein Eisen.

Die EP-A-0 385 123 beschreibt einen Katalysator zur Entfernung von Automobil-Abgasen, der auf einem Träger eine wirksame Menge mindestens eines Metalls aus der Platingruppe und einem Metallferrit zur Bindung von $H_2S$ enthält.

Die DE-A-2 333 816 beschreibt einen Katalysator zur Aufbereitung von Abgasen aus Brennkraftmaschinen, der einen gesinterten Werkstoff aus Eisenoxid und mindestens einem anderen Metalloxid darstellt, der zumindest teilweise Spinellstruktur hat. Das Metalloxid kann ein Oxid der Metalle Kupfer, Mangan und Chrom sein. Er enthält kein Oxid der Seltenerdmetalle und wird zur Aufbereitung von Abgasen aus Brennkraftmaschinen verwendet.

Die US-A-3 759 825 beschreibt einen Kupferoxid-Eisenoxid Katalysator zur Umwandlung von Thiolen in Disulfide. Er enthält kein Oxid der Seltenerdmetalle und wird für die Konversion von Thiolen in Disulfide verwendet.

Aufgabe der vorliegenden Erfindung war es nun, Katalysatoren für die Konvertierung von Kohlenmonoxid zur Verfügung zu stellen, die einerseits jedwede aus der Verwendung von Chromoxid resultierende Gefährdung von Mensch und Umwelt ausschließen, andererseits aber bezüglich der katalytischen Aktivität als auch bezüglich der thermischen Stabilität chromhaltigen Katalysatoren überlegen sind.

Überraschenderweise konnte diese Aufgabe nun gelöst werden durch chromfreie Katalysatoren, die als wirksame Komponente in der Einsatzform enthalten:

(a) 30 - 98 Gew.% Eisenoxid, berechnet als $Fe_2O_3$;

(b) 0,1 - 20 Gew.% Kupferoxid, berechnet als $CuO$;

(c) 0,1 - 20 Gew.% eines Oxids der Seltenerdmetalle, berechnet als $Me_2O_3$ (wobei Me ein Seltenerdmetall bedeutet) und/oder Zirkonoxid, berechnet als $ZrO_2$;

(d) 0,1 - 30 Gew.% mindestens eines Oxids eines oder mehrerer weiterer Unedelmetalle mit einem Ionenradius von 50 bis 72 pm (außer Chrom)

(e) 0 - 0,1 Gew.% mindestens eines Oxids eines oder mehrerer Edelmetalle aus der Platingruppe;

(f) 0 - 30 Gew.% Bariumoxid

"Chromfrei" bedeutet in diesem Zusammenhang, daß bei der Herstellung des Katalysators keine Chromverbindung als Rohstoff verwendet wird. Chromspuren, wie sie als Verunreinigung etwa im Eisensulfat technischer Reinheit vorhanden sein können, müssen bei der Herstellung der erfindungsgemäßen Katalysatoren im technischen Maßstab toleriert werden. Im allgemeinen soll jedoch der Chromgehalt weniger als 0,1 Gew.% betragen.

Unter der "Einsatzform" versteht man die Vorstufe des Katalysators, wie sie im Reaktor vorhanden ist, bis der Katalysator seine volle Leistungsfähigkeit ("Aktivform") erreicht hat. Üblicherweise liegt die Kombination aller Komponenten vor, wenn der Reaktor befüllt wird bzw. wenn die Reaktion eingesetzt hat. Es ist aber auch möglich, einen Teil der Komponenten im Reaktor zuzusetzen, wenn die Reaktion bereits eingesetzt hat. Auch diese Alternative soll durch den Begriff "Einsatzform" erfaßt werden.

Der Begriff "Einsatzform" wurde deshalb gewählt, weil die Zusammensetzung der Kombination in der "Aktivform" nicht genau festlegbar ist und beispielsweise von den Reaktionsbedingungen im Reaktor, z.B. von der Temperatur, dem Druck, dem Verhältnis zwischen den Einsatzmaterialien und damit dem Vorliegen einer reduzierenden oder inerten Atmosphäre, abhängt. So kann beispielsweise das Eisenoxid in der "Aktivform" als $Fe_2O_3$ oder $Fe_3O_4$ bzw. in Mischungen unterschiedlicher Zusammensetzung vorliegen. Entsprechendes gilt für einen Teil der Oxide der Komponenten (b) bis (e).

Die Kupferoxidkomponente (b) bewirkt in geringer Konzentration eine Selektivitätssteigerung in der Art, daß unerwünschte Nebenreaktionen, die zu einer Bildung von Kohlenwasserstoffen führen, unterdrückt werden. In höheren Konzentrationen dem Katalysator beigegeben, bewirkt das Kupferoxid in Verbindung mit einer Komponente aus (d) eine Verbesserung der katalytischen Aktiviät.

Die Komponente (c) dient wie die Komponente (d) zur Verbesserung der thermischen Stabilität.

Die Komponente (d) dient als stabilisierende Komponente. Aufgrund der angegebenen Ionenradien von 50 bis 72 pm (Picometer) sind die Ionen dieser Komponenten in der Lage, sich mehr oder weniger isomorph in das Eisenoxidgitter (Komponente a) einzubauen und auf diese Weise eine Stabilisierung des Eisenoxidgitters zu bewirken. Beispiele für geeignete Ionen mit den Ionenradien sind nachstehend angegeben: $Se^{4+}$= 50pm, $Al^{3+}$= 51pm, $Ge^{4+}$= 53pm, $Te^{6+}$=

56pm, $As^{3+}$= 58pm, $V^{5+}$= 59pm, $Mn^{4+}$= 60pm, $Ga^{3+}$= 62pm, $Sb^{5+}$= 62pm, $Mo^{6+}$= 62pm, $W^{6+}$= 62pm, $V^{4+}$= 63pm, $Co^{3+}$= 63pm, $Mg^{2+}$= 66pm, $Mn^{3+}$= 66pm, $Se^{1+}$= 66pm, $Li^+$= 68pm), $Ti^{4+}$= 68pm, $Ta^{5+}$= 68pm, $Ni^{2+}$= 69pm, $Nb^{5+}$= 69pm, $Te^{4+}$= 70pm, $Mo^{4+}$= 70pm, $W^{4+}$= 70pm, $Sn^{4+}$= 71pm, $Co^{2+}$= 72pm.

Die fakultativ verwendete Edelmetallkomponente (e) dient zur Aktivierung der Kupferkomponente.

Die Bariumoxid-Komponente (f) dient dazu, den Schwefel, der manchmal als Verunreinigung in der Eisenoxidkomponente enthalten ist, zu binden. Unter oxidierenden Bedingungen wird der im Eisenoxid zunächst gewöhnlich als Sulfidschwefel vorliegenden Schwefel in Sulfat umgewandelt, das in Form von Bariumsulfat gebunden wird.

Die erfindungsgemäße Kombination kann weitere, in Bezug auf die Umsetzung von Kohlenmonoxid mit Dampf zu Wasserstoff und Kohlendioxid inerte Komponenten enthalten. Dazu gehört beispielsweise Alpha-Aluminiumoxid. Wird dieses der erfindungsgemäßen Kombination zugemischt und liegt es in einem mechanischen Gemisch vor, so geht es nicht in die Komponente (d) ein. Weitere inerte Zusätze sind beispielsweise Mullit, Kordierit, Zement oder andere hitzebeständige Materialien.

Die Gehalte an den einzelnen Komponenten sind vorzugsweise wie folgt:

Der Eisenoxidgehalt (a) beträgt 50 bis 95 Gew.%, vorzugsweise 80 bis 95 Gew.%.

Der Kupferoxidgehalt (b) beträgt 0,5 bis 10 Gew.%, vorzugsweise 1 bis 5 Gew.%.

Der Gehalt an Seltenerdoxid und/oder Zirkonoxid (c) beträgt 0,1 bis 10 Gew.%, vorzugsweise 0,5 bis 5 Gew.%.

Der Gehalt an dem weiteren Unedelmetalloxid (d) beträgt 0,2 bis 15 Gew.%, vorzugsweise 0,5 bis 10 Gew.%.

Das weitere Unedelmetalloxid (d) stellt Aluminiumoxid, Magnesiumoxid, Manganoxid und/oder Molybdänoxid dar.

Der Gehalt an Bariumoxid (f) beträgt 0 bis 10 Gew.%, vorzugsweise 0 bis 5 Gew.%.

Die Herstellung der erfindungsgemäßen Katalysatoren kann grundsätzlich nach allen bekannten Methoden erfolgen, die eine für die katalytische Anwendung ausreichend intensive Vermischung der Komponenten gewährleisten.

Eine Verfahrensvariante ist dadurch gekennzeichnet, daß man die Oxide (a) bis (d) und gegebenenfalls (e) und (f) in feinteiliger Form miteinander vermahlt und das Mahlgemisch einer thermischen Behandlung, insbesondere bei Temperaturen von 400 bis 1000°C, vorzugsweise von 600 bis 900°C, unterzieht und zu Formkörpern verpreßt.

Eine weitere Verfahrensvariante ist dadurch gekennzeichnet, daß man die in die Oxide (a) bis (d) und gegebenenfalls (e) und (f) überführbaren Vorstufen miteinander vermischt und das Gemisch durch thermische Behandlung, insbesondere bei Temperaturen von 400 bis 1000°C, vorzugsweise von 600 bis 900°C, in die Oxide überführt und zu Formkörpern verpreßt.

Bei dieser Verfahrensvariante setzt man als Vorstufen die Hydroxide, Hydroxocarbonate und/oder Carbonate ein.

Eine dritte Verfahrensvariante ist dadurch gekennzeichnet, daß man die Vorstufen der Oxide (a) bis ((d) und gegebenenfalls (e) und (f) aus den Lösungen ihrer Salze durch gemeinsame oder sequentielle Fällung in Form unlöslicher Niederschläge abscheidet und die Niederschläge, gegebenenfalls nach dem Verpressen zu Formkörpern, zwecks Umwandlung in die Oxide einer thermischen Behandlung, insbesondere bei Temperaturen von 400 bis 1000°C, vorzugsweise von 600 bis 900°C unterzieht.

Eine vierte Verfahrensvariante ist dadurch gekennzeichnet, daß man die Eisenoxidkomponente (a), vorzugsweise in hydratisierter Form, mit einer Lösung der Salze der Komponenten (b) bis (d) und gegebenenfalls (e) und (f) imprägniert und das erhaltene Gemisch, gegebenenfalls nach dem Verpressen zu Formkörpern, durch eine thermische Behandlung, insbesondere bei Temperaturen von 400 bis 1000°C, vorzugsweise von 600 bis 900°C in das Gemisch der entsprechenden Oxide überführt. Zu allen Verfahrensvarianten können als Eisenoxidkomponente (a) bzw. zur Herstellung der Eisenoxidkomponente (a) Fe(II)-bzw. Fe(III)-Verbindungen oder deren Gemische verwendet werden. Als Eisenoxidkomponente verwendet man bei dieser Verfahrensvariante vorzugsweise Goethit. Wenn dieser Sulfidschwefel enthält, setzt man Bariumoxid oder eine Vorstufe von Bariumoxid als Schwefelfänger hinzu.

Als lösliche Salze eignen sich z.B. die Halogenide, Sulfate oder Nitrate. Als Fällungsmittel kommen vor allem Alkalicarbonate, -hydrogencarbonate und -hydroxide sowie die entsprechenden Ammoniumverbindungen in Betracht.

Zur Verformung der erfindungsgemäßen Katalysatormassen können bekannte Verfahren herangezogen werden. Bevorzugte Verformungsmethoden sind Tablettieren und Strangpressen, wobei sich die Verwendung von anorganischen oder organischen Hilfsstoffen in der Funktion von Gleitmitteln oder zur Verbesserung der Plastizität beim Strangpressen empfiehlt.

Die Verformung kann sowohl vor als auch nach der Calcinierung vorgenommen werden.

Eisen kann in zwei- oder dreiwertiger Form eingesetzt werden. Wird die zweiwertige Form verwendet, so ist dafür Sorge zu tragen, daß die Oxidation zur dreiwertigen Stufe vor, während oder nach der Herstellung der genannten innigen Mischung der Oxide stattfinden kann.

Weiterhin muß gewährleistet sein, daß die Eisenkomponente - etwa durch Reduktion mittels Kohlenmonoxid- zu Beginn der Konvertierungsreaktion - in die aktive Form, vermutlich $Fe_3O_4$, überführt werden kann. Andererseits ist es erforderlich, die Eisenkomponente, wenn sie in der zweiwertigen Form vorliegt, in die aktive Form zu oxidieren.

Die Kupferkomponente (b) wird vorzugsweise als Kupferoxid, -hydroxocarbonat, -hydroxid, -sulfat oder -nitrat eingesetzt.

Das in der Komponente (c) bevorzugt verwendete Cer kann in Form von Sulfat, Nitrat oder Carbonat eingesetzt werden.

Die Zirkonkomponente kann z.B. in Form saurer Zirkonylverbindungen eingesetzt werden, kann aber auch z.B. durch Hydrolyse des basischen Ammoniumzirkonylcarbonats oder als feinverteiltes Oxid oder Sol verwendet werden. Verwendet man als Ausgangsstoffe die Sulfate, so ist es ratsam, vor der Calcinierung die Sulfationen weitgehend durch Waschen zu entfernen.

Das in der Komponente (d) bevorzugt verwendete Aluminium kann z.B. als Sulfat, Nitrat, als Na-Aluminat, aber auch als feinverteiltes Hydroxid bzw. Oxidhydrat oder Sol eingesetzt werden.

Die Formgebung kann vor oder nach Überführung der Katalysatormasse in die oxidische Form erfolgen. Gegebenenfalls werden bei der Verformung Zusätze verwendet, die die Formbarkeit bzw. die Gleitfähigkeit verbessern, wie z. B. natürlicher oder synthetischer Graphit.

Es kann sich weiterhin als vorteilhaft erweisen, eine oder mehrere Metallkomponenten erst nach der Formgebung, etwa durch Imprägnierung der Formkörper mit einer die betreffende Metallkomponente enthaltenden Lösung, zu inkorporieren.

Gegenstand der Erfindung ist ferner die Verwendung der beschriebenen Katalysatoren zur Umsetzung von Kohlenmonoxid mit Wasserdampf unter Bildung von Wasserstoff und Kohlendioxid. Die erfindungsgemäßen Katalysatoren sind in einem weiten Temperaturbereich wirksam; bevorzugt werden sie angewendet im Bereich der Hochtemperaturkonvertierung, also bei Temperaturen von etwa 200 °C bis 600 °C. Der Gesamtdruck liegt normalerweise zwischen 1 und etwa 100 bar, wobei die Konzentration des Kohlenmonoxids im Eingangsgas je nach dem technischen Erzeugungsprozeß des zu konvertierenden Gases variieren kann. Vorgeschaltete Prozesse können z.B. die Dampfreformierung von Kohlenwasserstoffen, die Kohlevergasung oder die Methanolzersetzung sein.

Die Wirksamkeit der Katalysatoren hinsichtlich der Umsetzung von Kohlenmonoxid mit Wasserdampf wurde demonstriert, indem ein Gasgemisch, bestehend aus 10 Vol% CO und 90 Vol% Wasserstoff nach Einbringen von Wasserdampf durch ein elektrisch beheiztes Reaktorrohr geleitet wurde, das den Katalysator als Schüttgut enthielt. Zuvor wurde der Katalysator durch Überleiten einer Mischung aus Wasserstoff und Wasserdampf bei Reaktionstemperatur in die aktive Form überführt. Der Reaktor wurde unter weitgehend isothermen Bedingungen betrieben.

Die CO-Konzentration im Gasgemisch wurde vor und nach Passieren der Katalysatorschüttgutschicht gaschromatographisch analysiert und der Umsatz X gemäß

$$X = (C^E - C^A)/C^E$$

bestimmt, wobei $C^E$ für die CO-Eingangskonzentration und $C^A$ für die volumenkorrigierte CO-Ausgangskonzentration steht. Es wurden folgende Reaktionsbedingungen eingestellt:

| | |
|---|---|
| Gesamtdruck | 20 bar |
| Temperatur | 350°, 370°C |
| Raumgeschwindigkeit | 7000 (trockenes Gas) |
| $H_2O$/CO-Verhältnis | 10 |

Im Anschluß an diesen ersten Meßzyklus wird der Katalysator einer beschleunigten thermischen Alterung unterworfen, indem man ihn 15 Stunden bei 500°C mit der beschriebenen Mischung aus CO, $H_2$ und Wasserdampf behandelt. Dann wird erneut wie oben beschrieben der Umsatz bei 350° und 370° bestimmt (2. Zyklus). Die Unterschiede der beiden Meßzyklen geben Auskunft über die Thermostabilität der Katalysatormuster.

Die Erfindung ist durch die nachstehenden Beispiele erläutert:

BEISPIEL 1

Man löst 4508 g $Fe_2(SO_4)_3$ entwässert, 157 g $CuSO_4$ * 5 $H_2O$, 151 g basisches Zirkonylsulfat (33 % $ZrO_2$) und 141 g $Al(NO_3)_3$ * 9 $H_2O$ in 12 Liter entsalztem Wasser unter Zugabe von 252g $H_2SO_4$ (95%ig) und erhitzt die Lösung auf 60 °C. Weiterhin löst man 1700 g Ätznatron in 13.5 Liter $H_2O$ und erhitzt ebenfalls auf 60°C. Die Natronlauge wird in einem thermostatisierten Fällbehälter vorgelegt.

Die Lösung der Metallsalze wird mittels Schlauchpumpe unter Rühren in diese Vorlage dosiert, bis die Schlempe einen pH-Wert von 7-8 erreicht. (Dosierrate = 200 ml/min). Die Temperatur wird auf 60°C eingestellt.

Anschließend wird bei dieser Temperatur 4 h, unter Rühren, gealtert. Die Schlempe wird während der Fällung und Alterung mit einem Luftstrom von 1,5 m³/h gefrischt.

Die Schlempe wird über eine Filterpresse filtriert und gewaschen, bis die Gehalte an Na und S maximal 1000 ppm, (bezogen auf das auf 600°C erhitzte Produkt) betragen.

Der Filterkuchen wird 12 h bei 180°C getrocknet und anschließend über ein Sieb mit einer Maschenweite von 1 mm siebgranuliert. Das Granulat wird einer Calcinierung unterworfen; dabei wird mit 2°C/min auf mindestens 600°C geheizt und 12 Std. gehalten.

Das calcinierte Granulat wird unter Zusatz von 4 Gew.-% synthetischem Graphit, zu zylindrischen Tabletten, auf eine mittlere Seitendruckfestigkeit von 70 N verpreßt. (D x H = 4,5 x 4,5 mm). Die Seitendruckfestigkeit wird unter Verwendung des Tablettenprüfgeräts M4 der Firma Schleuninger ermittelt. Der zylindrische Formkörper mit einer Länge von 4,5 mm und einem Durchmesser von 4,5 mm wird zwischen die Backen der Vorrichtung gelegt, wobei ein Druck senkrecht zur Zylinderachse ausgeübt wird.

### BEISPIEL A (Vergleich)

Es handelt sich um einen kommerziellen Konvertierungskatalysator mit einem nominalen $Fe_2O_3$-Gehalt von 80 Gew.-% und 9% Gew.% $Cr_2O_3$, der wie folgt hergestellt wurde: Eisensulfat, und Natriumbichromat werden in Wasser gelöst und in eine Lösung von Natriumhydroxid gepumpt. Während der Fällung wird mit Luft gefrischt. Nach dem Waschen des abfiltrierten Niederschlages wird dieser getrocknet, calciniert und tablettiert.

### BEISPIEL B (Vergleich)

4508 g $Fe_2(SO_4)_3$ entwässert, 454 g basisches Zirkonylsulfat mit einem $ZrO_2$-Gehalt von 33 % sowie 157 g $CuSO_4*5H_2O$ werden unter Zusatz von 252 g $H_2SO_4$ (95%-ig) in 12 Liter $H_2O$ gelöst und auf 60°C erhitzt. Während einer Stunde pumpt man diese Lösung bei 60°C zu einer Lösung von 3106 g NaOH in 13.5 Liter $H_2O$. Anschließend rührt man 4 h bei der gleichen Temperatur. Während der gesamten Dauer leitet man einen Luftstrom von 1.5 $m^3$/h ein. Man filtriert über eine Filterpresse und wäscht mit 500 Liter $H_2O$. Bei 180°C wird 12 h getrocknet. Anschließend wird auf eine Korngröße von < 1 mm siebgranuliert. Das Granulat wird einer Calcinierung unterworfen; dabei wird mit 2°C/min auf mindestens 600°C geheizt und 12 Std. gehalten.

Das calcinierte Granulat wird unter Zusatz von 4% Graphit zu zylindrischen Tabletten des Formats 4.5*4.5mm verformt.

### BEISPIEL C (Vergleich)

Man löst 4633 g $Fe_2(SO_4)_3$ entwässert, 157 g $CuSO_4$ * 5 $H_2O$, und 736 g $Al(NO_3)_3$ * 9 $H_2O$ in 12 Liter entsalztem Wasser und erhitzt die Lösung auf 60°C. Die Fällung und Aufarbeitung werden durchgeführt, wie in Beispiel 1 beschrieben.

### BEISPIEL 2

Man löst 4508 g $Fe_2(SO_4)_3$ entwässert, 157 g Cu $SO_4$ · $5H_2O$, 736 g $Al(NO_3)_3$ · $9H_2O$ und 97 g $Ce(SO_4)_2$ in 12 Liter entsalztem Wasser und erhitzt die Lösung auf 60°C. Weiterhin löst man 2000 g Atznatron in 13,5 Liter $H_2O$ und erhitzt ebenfalls auf 60°C. Die Natronlauge wird in einem thermostatisierten Fällbehälter vorgelegt. Die Fällung und Aufarbeitung werden durchgeführt, wie in Beispiel 1 beschrieben.

### BEISPIEL 3

Man löst 4508 g $Fe_2(SO_4)_3$ entwässert, 157 g $CuSO_4$ ·$5H_2O$, 736 g Al $(NO_3)_3$ · $9H_2O$ und 133 g La $(NO_3)_2$ · $6H_2O$ in 12 Liter entsalztem Wasser und erhitzt die Lösung auf 60°C. Es wird weiter verfahren, wie in Beispiel 1 beschrieben.

### BEISPIEL 4

Man löst 4508 g $Fe_2(SO_4)_3$ entwässert, 157 g $CuSO_4$ · $5H_2O$, 611 g $MgSo_4$ · $7H_2O$ und 97 g $Ce(SO_4)_2$ in 12 Liter entsalztem Wasser und erhitzt die Lösung auf 60°C. Es wird weiter verfahren wie in Beispiel 1 beschrieben.

### BEISPIEL D (Vergleich)

Man löst 4508 g $Fe_2(So_4)_3$ entwässert und 157 g $CuSO_4$ · $5H_2O$ in 12 Liter entsalztem Wasser und erhitzt die Lösung auf 60°C. Es wird weiter verfahren, wie in Beispiel 1 beschrieben.

BEISPIEL 5 (Vergleich)

Man löst 4508 g $Fe_2(SO_4)_3$ entwässert, 157 g $CuSO_4 \cdot 5H_2O$, 736 g $Al(NO_3)_3 \cdot 9H_2O$ und 144 g $Mn\,(NO_3)_2 \cdot 4H_2O$ in 12 Liter entsalztem Wasser und erhitzt die Lösung auf 60°C. Es wird weiter verfahren, wie in Beispiel 1 beschrieben.

BEISPIEL 6 (Vergleich)

Man löst 4508 g $Fe_2(SO_4)_3$ entwässert, 157 g $CuSO_4 \cdot 5H_2O$, 736 g $Al(NO_3)_3 \cdot 9H_2O$ in 12 Liter entsalztem Wasser und erhitzt die Lösung auf 60°C. Es wird, wie in Beispiel 1 beschrieben, in NaOH gefällt. Der gewaschene Filterkuchen wird im Mischer mit Ammoniummolybat-Lösung (60 g $(NH_4)_6MoO_7 \cdot 4H_2O$ in 200 ml $H_2O$) imprägniert. Nach der Imprägnierung wird weiter verfahren, wie in Beispiel 1 beschrieben.

BEISPIEL 7

1908 g FeOOH werden im Kollergang vorgelegt. 152 g $Cu \cdot (NO_3)_2 \cdot 3H_2O$, 736 g $Al(NO_3)_3 \cdot 9H_2O$, 132 g $Ce(NO_3)_3 \cdot 6H_2O$ und 125 g $Ba(NO_3)_2$ werden in 1,1 Liter entsalztem Wasser gelöst und auf 60°C erwärmt. Die Salzlösung wird innerhalb von 5 Minuten in den laufenden Kollergang gegeben und noch 2 Stunden nachgekollert. Die noch feuchte Masse wird bei 180°C 12 Stunden getrocknet und über ein Sieb mit einer Maschenweite von 1 mm siebgranuliert. Es wird weiter verfahren, wie in Beispiel 1 beschrieben.

BEISPIEL 8 (Vergleich)

Man löst 4508 g $Fe_2(SO_4)_3$ entwässert, 157 g $Cu\,SO_4 \cdot 5H_2O$, 736 g $Al(NO_3) \cdot 9H_2O$ und 0.42 g Pd (II)-Acetat in 12 Liter entsalztem Wasser und erhitzt die Lösung auf 60°C. Es wird weiter verfahren, wie in Beispiel 1 beschrieben.

Die auf diese Weise erhaltenen Katalysatoren wurden dem oben beschriebenen Aktivitätstest unterzogen. Die folgende Tabelle faßt die Ergebnisse zusammen:

Tabelle

| Katalysator | X (%) | 1. Zyklus | X (%) | 2. Zyklus |
|---|---|---|---|---|
| Beispiel | 350° | 370° | 350° | 370° |
| 1 | 93 | 92 | 84 | 86 |
| A (Vergl.) | 63 | 77 | 58 | 74 |
| B (Vergl.) | 69 | 80 | 42 | 55 |
| C (Vergl.) | 92 | 93 | 60 | 70 |
| 2 | 93 | 93 | 90 | 91 |
| 3 | 91 | 92 | 64 | 75 |
| 4 | 75 | 82 | 69 | 75 |
| D (Vergl.) | 44 | 63 | 41 | 54 |
| 5 (Vergl.) | 93 | 93 | 79 | 82 |
| 6 (Vergl.) | 91 | 92 | 75 | 78 |
| 7 | 92 | 92 | 87 | 88 |
| 8 (Vergl.) | 89 | 90 | 61 | 72 |

Der erfindungsgemäße Katalysator nach Beispiel 1, welcher sowohl $Al_2O_3$ als auch $ZrO_2$ enthält, ist sowohl dem chromhaltigen kommerziellen Katalysator (Vergleichsbeispiel A) als auch den zum Vergleich hergestellten Katalysatoren, welche entweder $ZrO_2$ (Vergleichsbeispiel B) oder $Al_2O_3$ (Vergleichsbeispiel C) enthalten, in der Anfangsaktivität deutlich überlegen. Im Hinblick auf die Thermostabilität übertrifft er ebenfalls die Vergleichskatalysatoren B und C bei weitem und ist ebenfalls dem chromhaltigen kommerziellen Vergleichskatalysator überlegen.

Hinsichtlich der Thermostabilität kann eine weitere Verbesserung mit dem Katalysator nach Beispiel 2 erreicht werden, bei dem das $ZrO_2$ durch $Ce_2O_3$ ersetzt wurde. Wird, wie in Beispiel 3 beschrieben, anstelle von $Ce_2O_3$ das Oxid des Seltenerdmetalls Lanthan verwendet, wird ebenfalls eine höhere Anfangsaktivität und eine vergleichbare Thermostabilität erreicht wie bei dem kommerziellen Vergleichskatalysator. Beispiel 4 beschreibt einen Katalysator, bei dem das Unedelmetall Aluminium durch Magnesium ersetzt wurde, dessen Kation einen Ionenradius von 66 pm aufweist. Auch dieser Katalysator weist eine deutlich höhere Anfangsaktivität und Thermostabilität auf als die Vergleichskatalysatoren A und B sowie eine bessere Thermostabilität als der Vergleichskatalysator C. Der Vergleichskatalysator D, bestehend aus Eisenoxid und der Kupferkomponente, weist vor und nach der beschleunigten thermischen Alterung eine im Vergleich zu den anderen Katalysatoren unakzeptabel niedrige Aktivität auf. In den Beispielen 5 und 6 wurde anstelle der Oxide der Seltenerdmetalle Mn bzw. Mo verwendet. Diese Katalysatoren haben wiederum eine im Vergleich zum kommerziellen Katalysator überlegene Anfangsaktivität. In Beispiel 7 wird ein Katalysator beschrieben, der ausgehend von einer alternativen Eisenoxidkomponente auf dem Wege der Imprägnierung und mechanischen Vermischung hergestellt wurde. Dieser Katalysator erreicht zwar nicht die Aktivitätswerte des Ba-freien Katalysators nach Beispiel 2, übertrifft jedoch die Vergleichskatalysatoren A, B und C.

Wird wie im Beispiel 8 gezeigt, anstelle der stabilisierenden Komponenten Zr oder Ce ein Edelmetall eingesetzt, zeigt der Katalysator zwar eine deutlich höhere Anfangsaktivität als der kommerzielle Katalysator nach dem Vergleichsbeispiel A, die Thermostabilität jedoch wird nicht deutlich übertroffen.

## Patentansprüche

1. Chromfreier Katalysator für die Umsetzung von Kohlenmonoxid mit Dampf zu Wasserstoff und Kohlendioxid, enthaltend als wirksame Kombination in der Einsatzform:

   (a) 30 - 98 Gew.% Eisenoxid, berechnet als $Fe_2O_3$;
   (b) 0,1 - 20 Gew.% Kupferoxid, berechnet als $CuO$;
   (c) 0,1 - 20 Gew.% eines Oxids der Seltenerdmetalle, berechnet als $Me_2O_3$ (wobei Me ein Seltenerdmetall bedeutet) und/oder Zirkonoxid, berechnet als $ZrO_2$;
   (d) 0,1 - 30 Gew.% mindestens eines Oxids eines oder mehrerer weiterer Unedelmetalle mit einem Ionenradius von 50 bis 72 pm (außer Chrom);
   (e) 0 - 0,1 Gew.% mindestens eines Oxids eines oder mehrerer Edelmetalle aus der Platingruppe;
   (f) 0 - 30 Gew.% Bariumoxid.

2. Katalysator nach Anspruch 1 dadurch gekennzeichnet, daß der Eisenoxidgehalt (a) 50 bis 95 Gew.%, vorzugsweise 80 bis 95 Gew.%, beträgt.

3. Katalysator nach Anspruch 1 oder 2, dadurch gekennzeichnet, daß der Kupferoxidgehalt (b) 0,5 bis 10 Gew.%, vorzugsweise 1 bis 5 Gew.%, beträgt.

4. Katalysator nach einem der Ansprüche 1 bis 3, dadurch gekennzeichnet, daß der Gehalt an Seltenerdoxid und/oder Zirkonoxid (c) 0,1 bis 10 Gew.%, vorzugsweise 0,5 bis 5 Gew.%, beträgt.

5. Katalysator nach Anspruch 4, dadurch gekennzeichnet, daß das Seltenerdoxid Ceroxid darstellt.

6. Katalysator nach einem der Ansprüche 1 bis 5, dadurch gekennzeichnet, daß der Gehalt an dem weiteren Unedelmetalloxid (d) 0,2 bis 15 Gew.%, vorzugsweise 0,5 bis 10 Gew.%, beträgt.

7. Katalysator nach Anspruch 6, dadurch gekennzeichnet, daß das weitere Unedelmetalloxid (d) Aluminiumoxid, Magnesiumoxid, Manganoxid und/oder Molybdänoxid darstellt.

8. Katalysator nach einem der Ansprüche 1 bis 7, dadurch gekennzeichnet, daß der Gehalt an Bariumoxid (f) 0 bis 10 Gew.%, vorzugsweise 0 bis 5 Gew.% beträgt.

9. Katalysator nach einem der Ansprüche 1 bis 8, dadurch gekennzeichnet, daß er als Formkörper vorliegt, insbesondere in Form von Kugeln, Tabletten, Ringen oder Strangpreßlingen.

10. Katalysator nach Anspruch 9, dadurch gekennzeichnet, daß die Strangpreßlinge als Voll- oder Hohlkörper, z.B. als Wabenkörper, ausgebildet sind.

11. Verfahren zur Herstellung des Katalysators nach einem der Ansprüche 1 bis 10, dadurch gekennzeichnet, daß man die Oxide (a) bis (d) und gegebenenfalls (e) und (f) in feinteiliger Form miteinander vermahlt und das Mahlgemisch einer thermischen Behandlung, insbesondere bei Temperaturen von 400 bis 1000°C, vorzugsweise von 600 bis 900°C, unterzieht und zu Formkörpern verpreßt.

12. Verfahren zur Herstellung des Katalysators nach einem der Ansprüche 1 bis 10, dadurch gekennzeichnet, daß man die in die Oxide (a) bis (d) und gegebenenfalls (e) und (f) überführbaren Vorstufen miteinander vermischt und das Gemisch durch thermische Behandlung, insbesondere bei Temperaturen von 400 bis 1000°C, vorzugsweise von 600 bis 900°C, in die Oxide überführt und zu Formkörpern verpreßt.

13. Verfahren nach Anspruch 12, dadurch gekennzeichnet, daß man als Vorstufen die Hydroxide, Hydroxocarbonate und/oder Carbonate einsetzt.

14. Verfahren zur Herstellung des Katalysators nach einem der Ansprüche 1 bis 10, dadurch gekennzeichnet, daß man die Vorstufen der Oxide (a) bis (d) und gegebenefalls (e) und (f) aus den Lösungen ihrer Salze durch gemeinsame oder sequentielle Fällung in Form unlöslicher Niederschläge abscheidet und die Niederschläge, gegebenenfalls vor oder nach dem Verpressen zu Formkörpern, zwecks Umwandlung in die Oxide einer thermischen Behandlung, insbesondere bei Temperaturen von 400 bis 1000°C, vorzugsweise von 600 bis 900°C unterzieht.

15. Verfahren zur Herstellung des Katalysators nach einem der Ansprüche 1 bis 10, dadurch gekennzeichnet, daß man die Eisenoxidkomponente (a), vorzugsweise in hydratisierter Form, mit einer Lösung der Salze der Komponenten (b) bis (d) und gegebenenfalls (e) und (f) imprägniert und das erhaltene Gemisch, gegebenenfalls vor oder nach dem Verpressen zu Formkörpern, durch eine thermische Behandlung, insbesondere bei Temperaturen von 400 bis 1000°C, vorzugsweise von 600 bis 900°C in das Gemisch der entsprechenden Oxide überführt.

16. Verfahren nach Anspruch 15, dadurch gekennzeichnet, daß man als Eisenoxidkomponente (a) bzw. zur Herstellung der Eisenoxidkomponente (a) Eisen-(II)- oder Eisen-(III)-Verbindungen oder deren Gemische verwendet.

17. Verfahren nach Anspruch 15 oder 16, dadurch gekennzeichnet, daß man als Eisenoxidkomponente Goethit verwendet.

18. Anwendung des Katalysators nach einem der Ansprüche 1 bis 10, bzw. hergestellt nach einem der Ansprüche 11 bis 17, zur Umsetzung von Kohlenmonoxid mit Wasserdampf unter Bildung von Wasserstoff und Kohlendioxid.

19. Anwendung nach Anspruch 18 im Temperaturbereich von 200 bis 600 °C, vorzugsweise von 300 bis 500°C, bei Gesamtdrücken zwischen 1 und 150 bar, vorzugsweise zwischen 1 und 50 bar.

## Claims

1. A chromium-free catalyst for the conversion of carbon monoxide with steam to hydrogen and carbon dioxide, comprising as active combination in an application form:

   (a) 30 - 98 % by weight of iron oxide, calculated as $Fe_2O_3$;
   (b) 0.1 - 20 % by weight of copper oxide, calculated as $CuO$;
   (c) 0.1 - 20 % by weight of an oxide of a rare earth metal, calculated as $Me_2O_3$ (wherein Me represents a rare earth metal) and/or zirconium oxide, calculated as $ZrO_2$;
   (d) 0.1 - 30 % by weight of at least one oxide of one or more further base metals with an ionic radius of 50 to 72 pm (except chromium);
   (e) 0 - 0.1 % by weight of at least one oxide of one or more noble metals from the platinum group;
   (F) 0 - 30 % by weight of barium oxide.

2. A catalyst according to claim 1, characterised in that the iron oxide content (a) is 50 to 95 % by weight, preferably 80 to 95 % by weight.

3. A catalyst according to Claim 1 or 2, characterised in that the copper oxide (b) is 0.5 to 10 % by weight, preferably 1 to 5 % by weight.

4. A catalyst according to any one of Claims 1 to 3, characterised in that the content of rare earth oxide and/or zirconium oxide (c) is 0.1 to 10 % by weight, preferably 0.5 to 5 % by weight.

5. A catalyst according to Claim 4, characterised in that the rare earth oxide is cerium oxide.

6. A catalyst according to any one of Claims 1 to 5, characterised in that the content of the further base metal oxide (d) is 0.2 to 15 % by weight, preferably 0.5 to 10 % by weight.

7. A catalyst according to Claim 6, characterised in that the further base metal oxide (d) is aluminium oxide, magnesium oxide, manganese oxide and/or molybdenum oxide.

8. A catalyst according to any one of Claims 1 to 7, characterised in that the content of barium oxide (f) is 0 to 10 % by weight, preferably 0 to 5 % by weight.

9. A catalyst according to any one of Claims 1 to 8, characterised in that it is in the form of a moulding, in particular in the form of balls, tablets, rings or extrusion mouldings.

10. A catalyst according to Claim 9, characterised in that the extrusion mouldings are in the form of solid or hollow bodies, for example honeycomb bodies.

11. A method of producing a catalyst according to any one of Claims 1 to 10, characterised in that the oxides (a) to (d) and, optionally, (e) and (f) are ground together in finely divided form and the ground mixture undergoes a thermal treatment, in particular at temperatures of 400 to 1,000°C, preferably 600 to 900°C, and is pressed to form mouldings.

12. A method of producing a catalyst according to any one of Claims 1 to 10, characterised in that the precursors which can be converted into the oxides (a) to (d) and, optionally, (e) and (f) are mixed together and the mixture is converted into the oxides by thermal treatment, in particular at temperatures of 400 to 1,000°C, preferably 600 to 900°C, and is pressed to form mouldings.

13. A method according to Claim 12, characterised in that the hydroxides, hydroxycarbonates and/or carbonates are used as precursors.

14. A method of producing a catalyst according to any one of Claims 1 to 10, characterised in that the precursors of the oxides (a) to (d) and, optionally, (e) and (f) are separated from the solutions of their salts by joint or sequential precipitation in the form of insoluble precipitates and the precipitates, optionally before or after the pressing to form mouldings, for the purpose of conversion into the oxides are subjected to a thermal treatment, in particular at temperatures of 400 to 1,000°C, preferably 600 to 900°C.

15. A method of producing a catalyst according to any one of Claims 1 to 10, characterised in that the iron oxide component (a), preferably in hydrated form, is impregnated with a solution of the salts of the components (b) to (d) and, optionally, (e) and (f), and the resultant mixture, optionally before or after the pressing to form mouldings, is converted into the mixture of the corresponding oxides by a thermal treatment, in particular at temperatures of 400 to 1,000°C, preferably 600 to 900°C.

16. A method according to Claim 15, characterised in that iron (II) or iron (III) compounds or mixtures thereof are used as the iron oxide component (a) and/or to produce the iron oxide component (a).

17. A method according to Claim 15 or 16, characterised in that goethite is used as the iron oxide component.

18. Use of the catalyst according to any one of Claims 1 to 10, and/or produced in accordance with any one of Claims 11 to 17, for the conversion of carbon monoxide with steam to form hydrogen and carbon dioxide.

19. Use according to Claim 18 in the temperature range of 200 to 600°C, preferably 300 to 500°C, at total pressures of between 1 and 150 bar, preferably between 1 and 50 bar.

**Revendications**

1. Catalyseur sans chrome, pour la réaction du monoxyde de carbone avec de la vapeur d'eau, pour donner de l'hydrogène et du dioxyde de carbone, contenant, en combinaison active, sous une forme directement utilisable :

(a) de 30 à 98 % en poids d'oxyde de fer, calculé en $Fe_2O_3$ ;
(b) de 0,1 à 20 % en poids d'oxyde de cuivre, calculé en CuO ;

(c) de 0,1 à 20 % en poids d'un oxyde des métaux des terres rares, calculé en $Me_2O_3$ (où Me est un métal des terres rares) et/ou d'oxyde de zirconium, calculé en $ZrO_2$ ;

(d) de 0,1 à 30 % en poids d'au moins un oxyde d'un ou plusieurs autres métaux communs ayant un rayon ionique de 50 à 72 pm (à l'exception du chrome) ;

(e) de 0 à 0,1 % en poids d'au moins un oxyde d'un ou plusieurs métaux précieux du groupe du platine ;

(f) de 0 à 30 % en poids d'oxyde de baryum.

2. Catalyseur selon la revendication 1, caractérisé en ce que sa teneur en oxyde de fer (a) est de 50 à 95 % en poids et de préférence de 80 à 95 % en poids.

3. Catalyseur selon la revendication 1 ou 2, caractérisé en ce que sa teneur en oxyde de cuivre (b) est de 0,5 à 10 % en poids et de préférence de 1 à 5 % en poids.

4. Catalyseur selon l'une des revendications 1 à 3, caractérisé en ce que sa teneur en oxyde des terres rares et/ou en oxyde de zirconium (c) est de 0,1 à 10 % en poids et de préférence de 0,5 à 5 % en poids.

5. Catalyseur selon la revendication 4, caractérisé en ce que l'oxyde des terres rares est l'oxyde de cérium.

6. Catalyseur selon l'une des revendications 1 à 5, caractérisé en ce que sa teneur en l'autre oxyde d'un métal commun (d) est de 0,2 à 15 % en poids et de préférence de 0,5 à 10 % en poids.

7. Catalyseur selon la revendication 6, caractérisé en ce que l'autre oxyde d'un métal commun (d) est l'oxyde d'aluminium, l'oxyde de magnésium, l'oxyde de manganèse et/ou l'oxyde de molybdène.

8. Catalyseur selon l'une des revendications 1 à 7, caractérisé en ce que sa teneur en oxyde de baryum (f) est de 0 à 10 % en poids et de préférence de 0 à 5 % en poids.

9. Catalyseur selon l'une des revendications 1 à 8, caractérisé en ce qu'il se présente sous la forme d'un objet moulé, en particulier sous forme de sphères, de tablettes, d'anneaux ou d'objets moulés par injection.

10. Catalyseur selon la revendication 9, caractérisé en ce que les objets moulés par injection se présentent sous forme de corps pleins ou creux, par exemple sous forme de corps en nid d'abeille.

11. Procédé de fabrication du catalyseur selon l'une des revendications 1 à 10, caractérisé en ce qu'on broie les uns avec les autres sous une forme finement divisée les oxydes (a) à (d) et éventuellement (e) et (f), et que l'on soumet le mélange broyé à un traitement thermique, en particulier à des températures de 400 à 1000°C et de préférence de 600 à 900°C, et qu'on les comprime pour obtenir des objets moulés.

12. Procédé de fabrication du catalyseur selon l'une des revendications 1 à 10, caractérisé en ce qu'on mélange les uns aux autres les précurseurs pouvant être convertis en les oxydes (a) à (d) et éventuellement (e) et (f), et que l'on convertit le mélange en les oxydes par un traitement thermique, en particulier à des températures de 400 à 1000°C et de préférence de 600 à 900°C, et qu'on les comprime pour obtenir des objets moulés.

13. Procédé selon la revendication 12, caractérisé en ce que l'on utilise comme précurseurs les hydroxydes, les hydroxycarbonates et/ou les carbonates.

14. Procédé de fabrication du catalyseur selon l'une des revendications 1 à 10, caractérisé en ce qu'on sépare les précurseurs des oxydes (a) à (d) et éventuellement (e) et (f) des solutions de leurs sels, par une précipitation commune ou séquentielle, sous forme de précipités insolubles, et on soumet les précipités, éventuellement avant ou après compression pour donner des objets moulés, et pour assurer une conversion en les oxydes, à un traitement thermique, en particulier à des températures de 400 à 1000°C et de préférence de 600 à 900°C.

15. Procédé de fabrication du catalyseur selon l'une des revendications 1 à 10, caractérisé en ce qu'on imprègne d'une solution des sels des constituants (b) à (d) et éventuellement (e) et (f) le constituant oxyde de fer (a), de préférence sous forme hydratée, et que l'on convertit en le mélange des oxydes correspondant le mélange obtenu, éventuellement avant ou après compression pour donner des objets moulés, grâce à un traitement thermique, en particulier à des températures de 400 à 1000°C et de préférence de 600 à 900°C.

**16.** Procédé selon la revendication 15, caractérisé en ce qu'on utilise comme constituant oxyde de fer (a), ou pour préparer le constituant oxyde de fer (a) des composés du fer (II) ou du fer (III), ou leurs mélanges.

**17.** Procédé selon la revendication 15 ou 16, caractérisé en ce qu'on utilise comme constituant oxyde de fer de la goethite.

**18.** Utilisation du catalyseur selon l'une des revendications 1 à 10 ou fabriqué sur l'une des revendications 11 à 17, pour faire réagir du monoxyde de carbone avec de la vapeur d'eau, avec formation d'hydrogène et de dioxyde de carbone.

**19.** Utilisation selon la revendication 18, dans l'intervalle de températures de 200 à 600°C, de préférence de 300 à 500°C, sous une pression totale comprise entre 1 et 150 bar, de préférence entre 1 et 50 bar.